# FASCICULE DE BREVET EUROPEEN

(11) **EP 4 214 411 B1**
(45) Date de publication et mention de la délivrance du brevet: **12.11.2025**
(21) Numéro de dépôt: 21778376.0
(22) Date de dépôt: 15.09.2021
(51) Int. Cl.: F03B 13/00

(54) **DISPOSITIF DE GENERATION DE COURANT ELECTRIQUE DANS UN CIRCUIT D'ECOULEMENT DE FLUIDE**
VORRICHTUNG ZUR ERZEUGUNG VON ELEKTRISCHEM STROM IN EINEM FLUIDSTROMKREISLAUF
DEVICE FOR GENERATING ELECTRIC CURRENT IN A FLUID FLOW CIRCUIT

(30) Priorité: 16.09.2020 FR 2009393
(43) Date de publication de la demande: 26.07.2023
(73) Titulaire: Centre national de la recherche scientifique, 75016 Paris (FR); Institut Polytechnique de Grenoble, 38000 Grenoble (FR); Université Grenoble Alpes, 38400 Saint-Martin-d'Hères (FR)
(72) Inventeur: BARRE, Stéphane, 05000 GAP (FR); DELON, Antoine, 05230 CHORGES (FR)
(74) Mandataire: Hautier IP
(86) Numéro de dépôt international: PCT/EP2021/075298
(87) Numéro de publication internationale: WO 2022/058336

(56) Documents cités:
- CN-A- 105 443 298
- CN-A- 111 005 833
- CN-A- 111 396 231
- US-A1- 2010 253 081
- US-B1- 10 233 898

## Description

L'invention se situe dans le domaine de la génération de courant électrique au moyen d'un fluide (préférentiellement liquide) s'écoulant au sein d'une conduite ou d'une canalisation.

Cette génération de courant électrique, et plus particulièrement une pico-génération de courant électrique, est effectuée au moyen d'une machine hydraulique à axe transversal en vue de produire de l'énergie pour alimenter des capteurs (ou autres systèmes) dans des zones dépourvues de connexion au réseau électrique. On envisage en particulier l'application de cette invention dans le cadre de l'alimentation des capteurs de surveillance des réseaux d'alimentation en eau potable.

### Exposé de l'art antérieur :

La génération d'électricité au moyen de turbomachines hydrauliques est une technologie ancienne datant de plus de cent ans. Parmi tous les types de turbines utilisés jusqu'à présent, il existe deux grandes catégories : les turbines à action et celles à réaction.

Les turbines à action agissent principalement par déflexion d'un jet de liquide sur une roue à la géométrie adaptée. Les modèles les plus courants de turbines à action sont les turbine type Pelton et type Banki. Ces machines ont toutes en commun l'utilisation d'une chambre à pression atmosphérique (donc en contact avec l'air ambiant) pour réaliser l'interaction entre le jet liquide et la roue motrice.

Les turbines à réaction agissent principalement en utilisant la portance générée sur leurs pales pour créer un couple moteur. En conséquence, ces machines sont entièrement immergées au sein du fluide dont elles extraient l'énergie.

Les turbines les plus utilisées sont les machines axiales (de type hélices ou Kaplan) et les turbines à effet centripète (de type Francis). Si l'on se propose de générer de l'énergie en « insérant » une turbomachine hydraulique au sein d'un réseau de distribution d'eau potable, on doit veiller à ce qu'elle n'altère que de manière marginale les caractéristiques hydrauliques et mécaniques de ce réseau. Il est ainsi quasiment inenvisageable d'utiliser, pour de telles applications, des turbines à action. En effet, dans ce cas-là, il serait impossible de maintenir la continuité hydraulique de la tuyauterie support. En particulier, il serait nécessaire d'avoir une zone de contact avec de l'air pour y faire fonctionner la turbine. Ceci ne pourrait être réalisé qu'en prélevant une petite part du débit en vue de le détendre dans ladite turbine. Ce débit ainsi utilisé serait perdu pour la canalisation en question car dépressurisé à la pression atmosphérique après son passage dans la turbine. De ce fait, seules les turbines à réaction sont utilisables pour une telle application.

Ainsi, au sein de la famille des différentes turbines utilisables pour l'application envisagée, on note que deux principales solutions cohabitent. D'une part il y a les machines qui vont être installées en amont d'un coude de tuyauterie de façon à pouvoir faire sortir un arbre de cette même tuyauterie. Ainsi, celui-ci va servir à l'entrainement de la génératrice électrique qui, grâce à cette configuration, peut se situer à l'extérieur de la tuyauterie et se trouve ainsi en air libre. D'autre part, on trouve aussi des machines pour lesquelles la génératrice électrique est embarquée au sein de la conduite dans un carter étanche (technologie dite des groupes bulbes). Ces deux approches sont couramment utilisées dans toutes les centrales hydroélectriques du monde. Elles ont toutes les deux leurs avantages et leurs inconvénients et leur utilisation dépend à la fois de la technologie de turbine utilisée mais aussi de la configuration particulière de l'installation considérée.

Toutefois, si on considère leur utilisation dans le cadre d'un dispositif de pico-génération installé sur un circuit hydraulique (par exemple un réseau d'eau potable), l'ensemble de ces dispositifs partagent des inconvénients majeurs qui sont exposés ci-après. Tout d'abord, il existe un problème lié à l'étanchéité. Donc, quelle que soit la configuration choisie (montage en amont du coude avec génératrice à l'air libre ou montage « bulbe » avec génératrice noyée dans un carter étanche) il est nécessaire d'assurer une étanchéité parfaite de l'arbre de transmission situé entre la turbine et la génératrice électrique qu'elle soit noyée dans l'écoulement ou située à l'extérieur de la conduite.

Le document CN-A-111396231 propose ainsi un dispositif comportant une turbine montée dans un conduit, cette turbine comportant un axe de rotation en liaison avec un générateur engagé dans le conduit également. Le conduit comporte donc un orifice dans lequel une bague portant le générateur est engagée dans l'orifice pour permettre la transmission directe de la rotation de la turbine vers le générateur. On est confronté avec un tel montage à un risque au niveau de l'étanchéité du montage du générateur sur la conduite.

Dans les documents US-A-2010/0253031, CN-A-105443298 et CN-A-111005833, les dispositifs décrits présentent un axe de rotation qui traverse la paroi du conduit de part et d'autre et sont ainsi en liaison avec un générateur extérieur. Là encore, l'étanchéité peut poser un problème au fil du temps.

Le document US-B-10233898 décrit un dispositif de génération d'énergie interposé dans un conduit de toilettes. Ce dispositif comporte un tronçon de conduit dans lequel est monté une turbine dont l'axe de rotation porte un support pour des aimants qui génère un flux magnétique. Ce flux magnétique coopère avec des moyens magnétiques d'un stator ou circuit statorique pour produire un courant électrique. Le tronçon de conduit est conformé pour présenter une forme de boîtier dans lequel est monté la turbine, les moyens de génération de flux magnétique et le stator. Un tel dispositif présente l'inconvénient d'être prévu sur un conduit d'amenée d'eau au réservoir de toilette dans lequel un faible volume d'eau circule et ne peut convenir à une conduite d'un réseau d'alimentation en eau potable. De plus, en cas de panne, tout le dispositif doit être retiré, provoquant un arrêt dans le réseau d'alimentation ce qui n'est pas envisageable.

En outre, dans le cadre d'une utilisation sur une conduite support d'un réseau de distribution d'eau, il est impossible, sans avoir recours à un système de by-pass, d'évacuer de forts débits sans générer de fortes pertes de charge. Cet aspect des choses rend délicate l'utilisation de telles turbines (qu'elles soient axiales ou centripètes) dans l'application sur conduite de réseaux hydrauliques (cas des réseaux d'eau potable par exemple).

De plus, ces dispositifs génèrent une complexité géométrique et nécessitent des standards élevés en matière de qualité mécanique de construction. En effet, si on utilise des turbines hydrauliques axiales ou centripètes il est nécessaire, pour obtenir de bons rendements, d'utiliser des aubes ayant des caractéristiques géométriques relativement complexes et de ce fait, difficiles à fabriquer de manière économique.

On connaît ainsi des géométries de machines décrites dans les documents FR-A-3010150, US-A-2012007364, US-A-2010148515 et WO-A-2005080790 qui sont de type axial et ont donc recours à des formes de pales assez complexes. On note de plus, qu'en particulier, la machine décrite par la demande de brevet WO-A-2005080790, possède des grilles d'aube statiques mais réglables en amont de la turbine ce qui permet certes d'augmenter son rendement mais qui par ailleurs en complexifie la construction et donc la renchérie. Cette fonction de réglage est exécutée au moyen d'aubes à incidence variable dans le cadre de la turbine présentée dans le brevet US-A-2010148515. Cette solution génère une turbine d'une grande complexité ce qui constitue un défaut alors qu'on recherche une machine robuste, fiable et à faible coût de construction.

Un autre problème consiste en un encombrement de la turbine et de ses supports au sein de la tuyauterie réceptacle. Pour l'ensemble des machines présentées dans les différents documents précédemment cités, il s'avère qu'elles ont toutes en commun le fait d'être axiales. De ce fait, il est nécessaire, pour qu'elles fonctionnent correctement, que leur axe de rotation soit strictement parallèle à l'axe du flux fluidique. De ce fait, la mise en position précise de cet axe de rotation implique d'insérer, dans la conduite de fluide, tout un ensemble de pièces de support et de guidage.

Tout cet ensemble va, en plus de compliquer et renchérir la machine, générer de fortes pertes de charges parasites au coeur même de la conduite qui sont néfastes pour obtenir des niveaux de puissance utilisables pour de très faibles valeurs de la vitesse du fluide (de l'ordre de 0.5 m/s de vitesse de démarrage) tout en maintenant un niveau de pertes de charges le plus faible possible lors de ces séquences de production à faible vitesse et ceci dans le but de ne pas déséquilibrer le réseau hydraulique (par exemple d'eau potable) sur lequel on prélève de l'énergie.

Par ailleurs, le positionnement en périphérie du stator ou circuit statorique de génération électrique engendre un autre problème issu du fait que toutes les machines décrites dans les documents ci-dessus cités sont axiales et que le circuit statorique de génération électrique se situe tout autour de la périphérie de la turbine et donc de la tuyauterie elle-même. De ce fait, les dispositifs décrits dans ces documents n'utilisent pas de génératrice électrique classique sur ces turbines de très faible puissance destinées à être intégrées dans des conduites. Ce choix permet une grande simplification du problème car il n'y a donc pas, à priori, à gérer, de problème d'étanchéité sur arbre de transmission. Toutefois, la contrepartie de ce choix est qu'il va s'avérer nécessaire, sur ces machines axiales, d'installer un système de génération électrique sur la périphérie des pales et donc aussi de la tuyauterie. En particulier, sur les machines décrites dans les brevets FR3010150A1, US2012007364A1 et WO2005080790A1, il est proposé d'installer des aimants permanents en périphérie des pales. Ces aimants créent ainsi un champ magnétique fluctuant au travers des parois de la tuyauterie de façon à induire un courant dans le circuit statorique installé sur l'intégralité du pourtour de la tubulure et qui en est de ce fait, solidaire.

Un tel choix pose de nombreux problèmes techniques difficiles à résoudre. En effet, le fait de disposer des aimants en périphérie des aubes de turbine va générer (du fait de la masse relativement importante de ces aimants) des efforts centrifuges importants et de plus nécessite un équilibrage dynamique très rigoureux de la turbine du fait de la présence de masses importantes à l'extrémité des pales. En outre, cette stratégie impose d'entourer l'intégralité de la conduite avec des bobines inductrices ou des circuits magnétiques afin de créer, sur la périphérie de la conduite, une machine synchrone à fort nombre de pôles spécifique à la tuyauterie et à la turbine utilisée. Il n'est donc pas possible de se servir d'une machine synchrone standard disponible dans le commerce et fabriquée en grande série de façon à réduire drastiquement ce poste de coût.

Il s'avère de plus que, dans cette configuration où l'on génère le courant en périphérie de la turbine, il va falloir que la zone d'entrefer entre l'extrémité des pales et la tuyauterie soit la plus petite et régulière possible. Cette précaution est indispensable pour minimiser les pertes de flux magnétique entre la turbine et le circuit statorique situé sur la périphérie extérieure de la conduite. En effet, de telles pertes pourraient engendrer une forte chute du rendement de conversion mécanique > électrique de la génératrice. Cette obligation va donc induire une contrainte très stricte de fabrication en ce qui concerne la tolérance liée à l'obtention d'une cote parfaitement constante pour la dimension de l'entrefer et surtout à son respect quelles que soient les conditions de fonctionnement de la machine. Cette contrainte engendre une forte augmentation de la complexité de fabrication de la machine et donc une inflation de son coût.

Il est probable que le fluide qui passe dans la turbine puisse contenir des corps étrangers et le danger que ceux-ci viennent contaminer l'entrefer n'est pas négligeable. Cette situation pourrait engendrer des dysfonctionnements illustrant un manque de rusticité de ce concept vis-à-vis de la qualité du fluide turbiné. Il pourrait en particulier y avoir un risque de détérioration des aimants qui sont particulièrement exposés à ce souci du fait de leur installation en périphérie des aubes de la turbine.

Ainsi, dans les documents FR-A-3010150 et WO-A-2005080790, pour protéger ces aimants, on a proposé de les installer dans des sortes de cavités annulaires autour de la périphérie de la roue, de sorte à la protéger d'éventuels corps étrangers présents dans le fluide. Toutefois, avec une telle approche, les aimants se trouvent être en mouvement à très forte vitesse relative vis à vis du fluide emprisonné dans cette cavité de protection. Il va donc se produire, du fait de la petite taille de ladite cavité, la mise en place d'un écoulement de Couette turbulent qui va générer de fortes pertes hydrodynamiques par frottement au niveau des aimants et ainsi diminuer le rendement global de la machine. De plus, à cause du phénomène de recirculation, le fluide en contact avec les aimants est quasiment enfermé dans cette cavité de protection. Ainsi, le niveau de convection est très faible à l'intérieur de la cavité et de ce fait on échange très peu de masse et d'énergie avec le fluide extérieur circulant dans la conduite. Cette situation qui accumule les pertes hydrodynamiques dues à l'écoulement de Couette turbulent ainsi que les pertes électromagnétiques dans l'entrefer dans une zone où le fluide ne peut échanger que très peu de masse et d'énergie avec l'extérieur va conduire à un échauffement de l'entrefer qui va se répercuter en même temps sur les aimants et surtout sur le circuit statorique situé tout autour de la périphérie de la conduite.

Ainsi, avec cette conception de machine axiale, il s'avère très difficile de refroidir correctement le module de conversion de l'énergie mécanique en énergie électrique. Il s'ensuit une limite de fonctionnement qui est très vite atteinte si la température augmente trop en particulier au niveau des aimants.

Compte-tenu des inconvénients cités concernant l'état de l'art et la technologie actuellement utilisée, la présente invention se propose de remédier auxdits inconvénients en proposant un dispositif de génération d'énergie dont l'architecture et la mise en œuvre simples lui permettent d'être robuste et économiquement intéressant.

A cet effet, la présente invention a pour objet de proposer un dispositif de génération de courant électrique dans un circuit d'écoulement de fluide selon la revendication 1.

Ainsi de manière avantageuse, seul le rotor est installé dans le segment du conduit, ce qui simplifie la construction du dispositif et de manière encore plus avantageuse, les extrémités longitudinales de l'axe de rotation de la turbine sont montées entre les parois opposées du conduit, et en appui contre celles-ci de sorte la solution technique proposée par la présente invention n'implique aucun système d'étanchéité. En effet, la turbine proposée s'insère naturellement dans un segment de conduit, dont les extrémités sont configurées pour constituer un tronçon de tuyauterie standard de section quelconque d'un circuit d'écoulement.

La turbine à flux transversal ou transverse est une turbine pourvue d'un axe de rotation vertical autour duquel sont entraînées en rotation des pales, le flux de l'écoulement arrivant perpendiculairement à cet axe.

La turbine présente ainsi aux extrémités longitudinales de son axe de rotation des paliers sur roulements à billes, lesdits paliers étant montés dans des logements ménagés sur le segment de conduit pour maintenir la turbine à flux transversal dans le segment de conduit et autoriser la rotation de la turbine. Ces roulements à billes sont de préférence en céramique et de ce fait ne nécessitent en outre ni moyens d'étanchéité ni moyens de lubrification.

De préférence, la turbine est constituée de deux moyeux, de préférence en forme de disque soit plan soit bombé en forme de dôme entre lesquels s'étendent des pales, de préférence deux, entraînables en rotation sous l'effet de l'écoulement d'un fluide dans le conduit.

Chaque moyeu présente en son centre un palier et porte des moyens de génération d'un flux magnétique tels que des aimants permanents. De préférence, un ou les deux moyeux sont munis d'aimants permanents sur l'intégralité de leur pourtour. Ainsi, la puissance mécanique générée par l'entraînement en rotation des pales autour de l'axe de rotation de la turbine par le flux d'écoulement dans le conduit est transférée vers l'extérieur du conduit au moyen d'un champ magnétique créé par les aimants permanents portés par le moyeu également entraîné en rotation. Il n'y a donc pas de nécessité à prévoir un système de transmission mécanique vers l'extérieur de la tuyauterie et, de ce fait, aucun dispositif d'étanchéité n'est nécessaire. Cette caractéristique permet de proposer un dispositif à la fois simple, robuste et économique.

Selon une forme de réalisation de la turbine, son axe de rotation est constitué d'un arbre s'étendant entre les moyeux.

Selon une autre forme de réalisation, l'axe de rotation de la turbine est constitué uniquement des deux paliers. Ainsi, de manière avantageuse, l'axe de rotation est dématérialisé entre les deux moyeux, ce qui ainsi n'occasionne quasiment aucune perte de charge et ce même pour des vitesses de flux très élevées.

De préférence, les deux pales s'étendent entre les moyeux de manière symétrique par rapport à l'axe de rotation de la turbine et la partie centrale desdites pales est entraînable en rotation en balayant une surface inscrite dans un cylindre de révolution autour de l'axe de rotation.

Avantageusement, le couple moteur de cette turbine est transmis vers l'extérieur de la tuyauterie via l'action d'un champ magnétique à travers la paroi du segment de conduit et dans la mesure où la turbine repose sur deux paliers à roulements à billes, ceux-ci baignent dans le fluide et le dispositif ne nécessite donc ni étanchéité ni lubrification. Cet ensemble est ainsi aisément compatible avec les normes d'hygiène liées au turbinage de l'eau potable. Il existe en effet de nombreuses normes pour le matériel trempé dans de l'eau potable (normes alimentaires), par exemple la norme XP P41-280 de la circulaire DGS/SD7A N°571 du 25 Novembre 2002. Les principales contraintes techniques impliquées par le respect de ces normes consistent en fait à éviter tous les systèmes d'étanchéité et/ou de lubrification de façon à ne pas risquer de contamination extérieure de l'eau au niveau de la machine et ensuite d'utiliser des matériaux autorisés pour le contact alimentaire tels que par exemple les céramiques, les aciers inox alimentaires, etc... Le dispositif selon l'invention permet donc de répondre avantageusement à ces exigences.

Le dispositif selon l'invention est intégrable dans un circuit d'écoulement de fluide, notamment liquide, comportant des conduits dont la section peut être circulaire, mais aussi carrée, rectangulaire ou polygonale quelconque. En outre, le dispositif selon l'invention peut présenter une taille très réduite. Il peut ainsi être installé sur des canalisations d'eau potable de diamètres compris entre 100 et 200 mm.

Le dispositif selon l'invention permet donc de récupérer le couple de la turbine, à l'extérieur du conduit, au moyen d'un ou plusieurs circuits statoriques installés au niveau du ou des moyeux magnétiques se trouvant en regard à l'intérieur de ce même conduit.

Selon une première forme de réalisation, le stator ou circuit statorique constitue également le générateur électrique.

Selon une deuxième forme de réalisation, le circuit statorique comprend un ou plusieurs éléments coupleurs magnétiques, entraînables en rotation et permettant l'entrainement mécanique direct d'une ou plusieurs génératrices électriques classiques.

Selon une troisième forme de réalisation, le circuit statorique comprend un ou plusieurs ensembles coupleurs-multiplicateurs magnétiques permettant l'entrainement mécanique d'une ou plusieurs génératrices électriques de grande série.

De manière avantageuse, la surface de transfert de la puissance de flux en direction de l'extérieur du conduit ou canalisation ne correspond ainsi qu'à un secteur angulaire faible du conduit et ne nécessite donc pas l'utilisation de l'intégralité de la surface périphérique dudit conduit pour la transmission intégrale du couple de la turbine sous forme magnétique, ce qui permet de simplifier l'architecture de ce dispositif et limite son encombrement sur la tuyauterie. La technologie proposée ici est simple, rustique et donc robuste.

En effet, dans le cas des dispositifs à machines axiales, il est nécessaire de prévoir un dispositif de génération électrique installé en périphérie des aubes. De ce fait, le circuit statorique induit se trouve à occuper toute la périphérie de la conduite support. Ceci conduit à une rigidité dans l'architecture de la machine car ce circuit statorique doit être réalisé sur mesure et, de ce fait, est difficilement standardisable ce qui rend difficile l'obtention d'une baisse substantielle des coûts.

Dans le dispositif selon la présente invention, on utilise un circuit statorique rapporté sur une bride latérale du conduit. On peut ainsi utiliser des circuits magnétiques de géométrie très simple et standardisables facilement. De plus, si on utilise un élément coupleur magnétique ou même un élément coupleur-multiplicateur magnétique, on peut alors utiliser des génératrices électriques standard de faibles coûts et de fortes performances et le tout, sans perte significative dans la transmission de la puissance.

Le dispositif selon l'invention présente en outre une architecture avec laquelle il n'y a pas de risque de pollution de l'entrefer électromagnétique par un corps étranger se trouvant dans le fluide car, ici, le flux magnétique est transmis à travers la paroi du conduit dans un zone d'étendue très limitée et qui est protégée de l'écoulement principal. Ainsi de manière avantageuse, il n'y a plus de risque d'échauffement du circuit statorique puisque celui-ci est à l'extérieur du conduit et peut ainsi être aisément équipé d'un radiateur à ailettes qui sera largement suffisant pour dissiper les quelques Watts de pertes thermiques que l'on a dans le cadre d'une utilisation du dispositif selon l'invention pour l'alimentation de capteurs le long d'un circuit d'alimentation en eau potable.

De manière très avantageuse, en cas de survenue de forts débits dans le circuit d'écoulement dans lequel est implanté un dispositif selon l'invention, ce dernier comprend des moyens d'immobilisation de la turbine avec ses pales orientées dans le sens du flux d'écoulement. Dans cette position, la turbine de préférence bipale à axe de rotation transversal qui est « dématérialisé » entre les deux moyeux selon l'un des modes réalisation, n'offre qu'une très faible trainée et n'induit quasiment aucune perte de charge et ce même pour des vitesses de flux très élevées. On pourra donc se passer de système de by-pass en utilisant un dispositif selon l'invention. Le dispositif ainsi que son système de contrôle-commande sont ainsi grandement simplifiés ce qui entraîner une baisse du coût et une augmentation de la fiabilité.

On évite notamment que, lors de cas d'urgence pouvant survenir et engendrer de forts débits dans le circuit d'écoulement, par exemple en cas de rupture de tuyauterie sur le réseau hydraulique en aval de la turbine ou encore lors de l'utilisation d'une borne d'incendie, les vitesses d'écoulement très élevées ne mettent en danger l'intégrité mécanique de la turbine.

De plus, on évite ainsi la nécessité de prévoir un système de dérivation (by-pass) qui serait lui nécessaire en cas d'utilisation d'une turbine à flux axial. En effet, dans le cas d'une turbine à flux axial, une fois celle-ci arrêtée, elle représente une bien trop grande perte de charge pour pouvoir assurer correctement cette fonction de décharge. En outre, comme il est difficile de faire en sorte qu'elles résistent à de telles vitesses sans être obligé de les sur-dimensionner, on prendrait alors le risque de les rendre quasi inopérantes (ou dotées de très faibles rendements) lors d'une utilisation à vitesse de flux très faible (de l'ordre de 0.5 m/s) qui constitue plutôt le quotidien d'utilisation.

Selon un autre avantage d'un dispositif selon l'invention, la turbine à axe transversal utilisée dans le cadre de la présente invention, permet l'utilisation de profils hydrauliques symétriques et identiques tout au long d'une pale. Par ailleurs, on peut utiliser des pales dont la corde est constante sur toute la longueur et qui sont aussi dépourvues de vrillage. De ce fait, la fabrication peut être extrêmement simplifiée par rapport aux pales de machines axiales, par exemple qui nécessitent une géométrie de pale tridimensionnelle et complexe à réaliser, d'autant que le plus souvent le profil hydrodynamique évolue entre l'emplanture et l'extrémité de la pale. On peut en particulier produire les profilés de pale par pultrusion de matériaux composites puis ensuite les cintrer pour obtenir une forme circulaire. On peut aussi utiliser une filière pour extruder une base de profil en acier inoxydable alimentaire puis cintrer à la forme circulaire désirée. Tous ces procédés sont économes et permettent une fabrication en petite ou grande quantité à faibles coûts.

De plus les turbines à axe horizontal nécessitent des systèmes de paliers et de supports au milieu de la conduite afin de pouvoir assurer la fonction de guidage de la roue de la turbine. Al'opposé, la turbine à axe transversal utilisée dans la présente invention, ne nécessite pas de structure de support au centre de la tuyauterie ce qui permet de drastiquement simplifier le dispositif. En effet, aucune structure fixe ne va obstruer partiellement la veine fluide au sein du conduit au contraire des machines axiales. Il en résulte une perte de charge parasite beaucoup plus faible et donc moins de perturbations du réseau sur lequel on puise l'énergie.

De manière avantageuse, le dispositif selon l'invention peut être utilisé pour la pico-génération d'énergie électrique afin d'alimenter des appareils électriques tels que des capteurs de surveillance sur des circuits d'écoulement de fluide tels que des réseaux d'eau potable. En effet, il est possible que dans un horizon très proche, la législation impose que tous les réseaux d'eau potable soient munis d'un maillage très dense de capteurs de surveillance afin de déterminer les débits de pertes et également surveiller certains paramètres chimiques de l'eau, tel qu'en particulier la présence de produits toxiques dans l'eau pouvant survenir soit de manière accidentelle soit suite à des actes malveillants. Le dispositif selon l'invention offre donc une solution simple et efficace pour l'alimentation de ces capteurs.

De plus, on constate que dans la plupart des endroits où ces capteurs sont implantés ou implantables, il n'est pas toujours simple et économique de se raccorder au réseau électrique afin d'alimenter ces capteurs.

La solution actuellement employée par les exploitants est donc d'utiliser des piles dont la durée de vie est comprise entre 1 et 3 ans. On connaît par exemple un capteur connu sous la dénomination commerciale VEOLIA KAPTA 3000-AC4 qui est alimenté par piles. Une telle solution d'alimentation électrique par pile reste donc la plus utilisée car les capteurs sont encore peu nombreux sur les réseaux et les exploitants n'ont pas encore l'obligation de financer le recyclage des piles usagées.

Toutefois, comme déjà évoqué, avec l'arrivée des nouvelles réglementations Européennes liées à la surveillance des réseaux d'eau potable, il faudra installer des milliers de capteurs pour respecter la densité de maillage demandée. De ce fait, les solutions à base de piles vont devenir trop chères tant en terme de coûts d'achat et de recyclage mais aussi en terme de coûts de maintenance additionnels si l'on doit intervenir très régulièrement pour changer les piles sur les milliers de capteurs qui seront en service sur les réseaux.

La mise en place de dispositifs de génération d'énergie électrique selon l'invention dans des réseaux de distribution d'eau potable permet d'alimenter les capteurs en énergie de manière fiable, robuste et économique.

La présente invention concerne également un circuit d'écoulement de fluide comportant au moins un appareil électrique tel qu'un capteur, caractérisé en ce que ledit circuit comporte un dispositif de génération d'énergie électrique selon l'invention intégré dans le circuit, destiné à alimenter le capteur en énergie électrique.

La présente invention a également pour objet une turbine à flux transversal selon la revendication 17.

On décrira maintenant l'invention plus en détails en référence aux figures qui représentent :
[Fig. 1] une vue en perspective éclatée du dessus d'un premier mode de réalisation d'un dispositif selon l'invention ;
[Fig. 2] une vue en perspective avant du mode de réalisation de la figure 1 ;

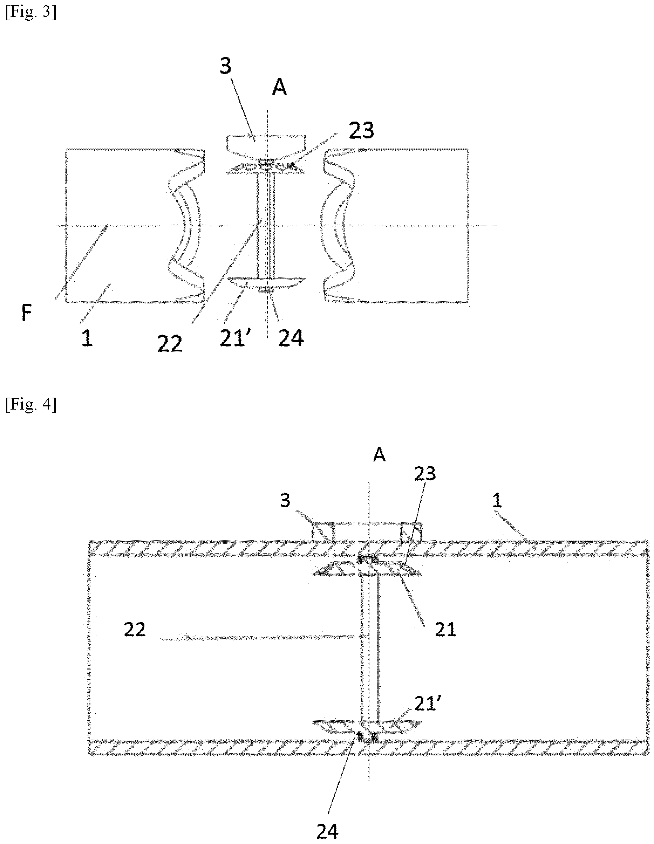

[Fig. 3] une vue en perspective latérale du dispositif de la figure 1 ;
[Fig. 4] une vue en coupe longitudinale selon le plan de coupe A-A de la figure 2 ;
[Fig. 5] une vue en perspective éclatée du dessus d'une variante du dispositif de la figure 1 ;
[Fig. 6] une vue en perspective avant du mode de réalisation de la figure 5 ;
[Fig. 7] une vue en perspective latérale du dispositif de la figure 5 ;
[Fig. 8] une vue en perspective éclatée du dessus d'un deuxième mode de réalisation de l'invention ;
[Fig. 9] une vue en perspective éclatée du dessus d'une variante du dispositif de la figure 8 ;
[Fig. 10] une vue en perspective éclatée du dessus d'un troisième mode de réalisation de l'invention ; et
[Fig. 11] une vue en perspective éclatée du dessus d'une variante du dispositif de la figure 10
[Fig. 12] une vue en perspective éclatée d'un autre mode de réalisation d'un dispositif selon l'invention ;
[Fig. 13] une vue en perspective latérale du dispositif de la figure 12 ; et
[Fig. 14] une vue en coupe selon la ligne de coupe A-A de la figure 13.

Le dispositif de génération de courant électrique selon l'invention comprend un segment de conduit 1 dans lequel est monté un rotor 2. Un stator 3 est installé à la périphérie extérieure du conduit 1 pour coopérer avec le rotor 2.

Le rotor 2 est constitué d'une turbine à flux transversal installée dans le segment de conduit 1 de sorte que l'axe de rotation A de la turbine 2 s'étend transversalement dans le segment de conduit 1. Cette turbine 2 de section circulaire possède deux pales 22 et est à axe transversal.

Cette turbine 2 est constituée de deux moyeux 21 entre lesquels s'étendent des pales 22, de préférence deux. Ces pales 22 sont montées de manière symétrique par rapport à l'axe de rotation A de la turbine 2 et mobiles en rotation autour de l'axe A sous l'effet d'un flux de fluide F s'écoulant dans le conduit 1.

En mouvement, les pales 22 balaient une surface inscrite dans un cylindre de révolution autour de l'axe A.

Chaque pale 22 s'étend entre les moyeux 21 selon une courbe suivant sensiblement la section circulaire du conduit mais tout type de pales issues de turbines à flux transverse peut être utilisé à condition que la partie centrale de la pale balaie un cylindre de révolution. La forme des pales peut être aussi en U, ou toute forme appropriée. De préférence, les extrémités de pale sont fixées aux moyeux. De préférence, les pales 22 de la turbine sont produites par pultrusion de matériaux composites puis cintrées pour obtenir une section circulaire. Elles peuvent notamment être produites en acier inoxydable de qualité alimentaire extrudé en filière puis cintrées pour obtenir une section circulaire.

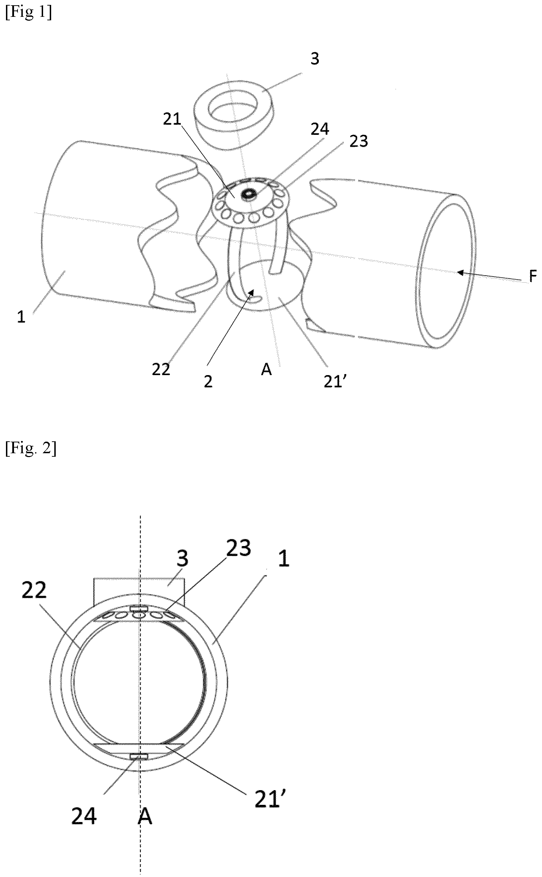

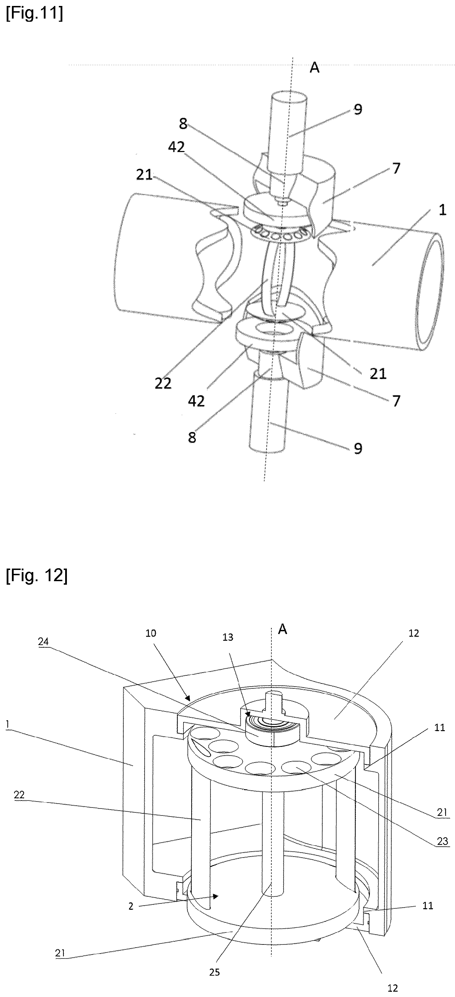

Chaque moyen 21, 21' se présente sous la forme d'un disque bombé en forme de coupelle ou dôme tel que représenté dans la figure 1 ou plan comme représenté à la figure 12, entraîné en rotation par les pales 22. L'un de ses moyeux 21 contient des aimants permanents 23 qui sont mis de sorte à être positionnés face à la paroi du segment de conduit 1. Le flux magnétique variable se transmet à travers la paroi du conduit 1 et induit, au sein de bobinages du circuit statorique 3 positionné à l'extérieur du conduit 1 en vis à vis de cette extrémité de la turbine 2, un courant électrique qui est ensuite exploité.

Le second moyeu 21' est dans cet exemple dépourvu d'aimants permanents.

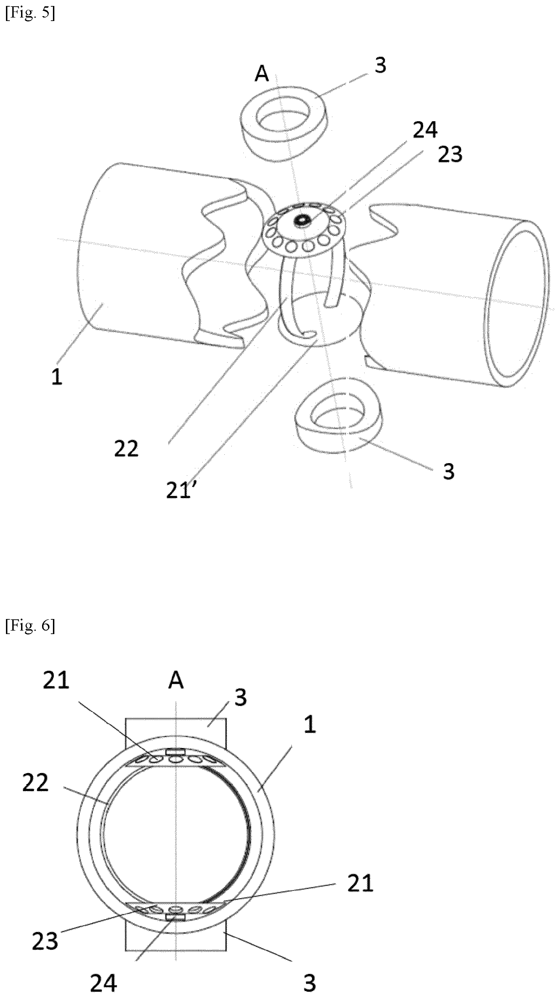

A la figure 5 est représenté une variante de ce premier mode de réalisation dans lequel, pour des applications pour lesquelles un plus fort couple à transmettre est requis, on utilise un deuxième moyeu 21 portant des aimants 23 et disposé à l'opposé du premier sur le conduit 1. Grâce à ce dispositif, on peut doubler le couple transmissible.

La turbine à axe transversal bipale 2 est donc destinée à faire partie intégrante d'un conduit de section quelconque (circulaire comme représentée sur les figures mais également, carrée, rectangulaire ou polygonale quelconque) dans lequel s'écoule un fluide notamment liquide.

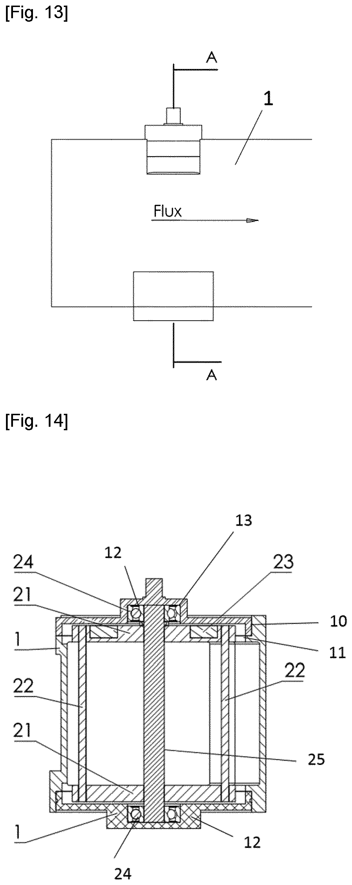

Cette turbine 2 est maintenue dans le conduit par deux paliers 24 ménagés au centre des moyeux en forme de disque bombé 21. Ces deux paliers 24 maintiennent la turbine contre les parois opposées du segment conduit 1, ces paliers étant de préférence logés dans des logements ménagés à cet effet dans la paroi du segment de conduit 1 de sorte que l'axe de rotation A de la turbine soit orthogonal à l'axe du flux d'écoulement du fluide F. Ainsi, ce maintien de la turbine 2 dans le segment de conduit 1 ne nécessite ni étanchéité ni lubrification. La puissance de la turbine 2 est transmise vers l'extérieur du conduit via un dispositif magnétique utilisant un ou plusieurs moyeux munis d'aimants permanents sur l'intégralité de son pourtour. Comme on peut le voir sur les figures 12 et 14, le segment de conduit 1 peut comporter des logements 13 dans lesquels sont montés les paliers 24. Les moyeux 21 sont montés entraînables en rotation autour des paliers 24.

La surface de transfert de cette puissance en direction de l'extérieur du segment de conduit 1 ne correspond qu'à un secteur angulaire faible dudit segment de conduit et ne nécessite aucunement l'utilisation de l'intégralité de la surface périphérique dudit segment de conduit pour la transmission intégrale du couple de la turbine sous forme magnétique.

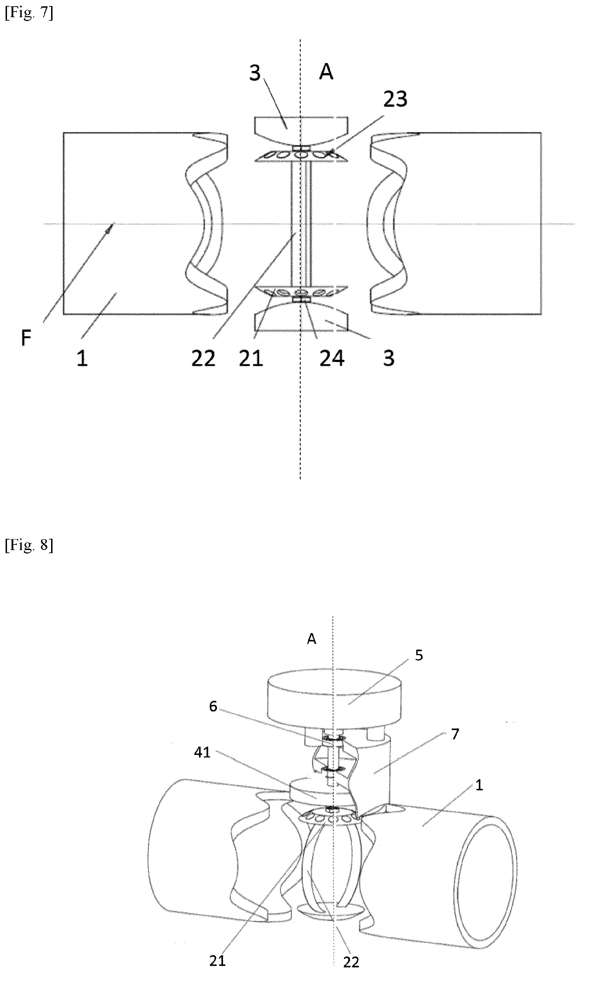

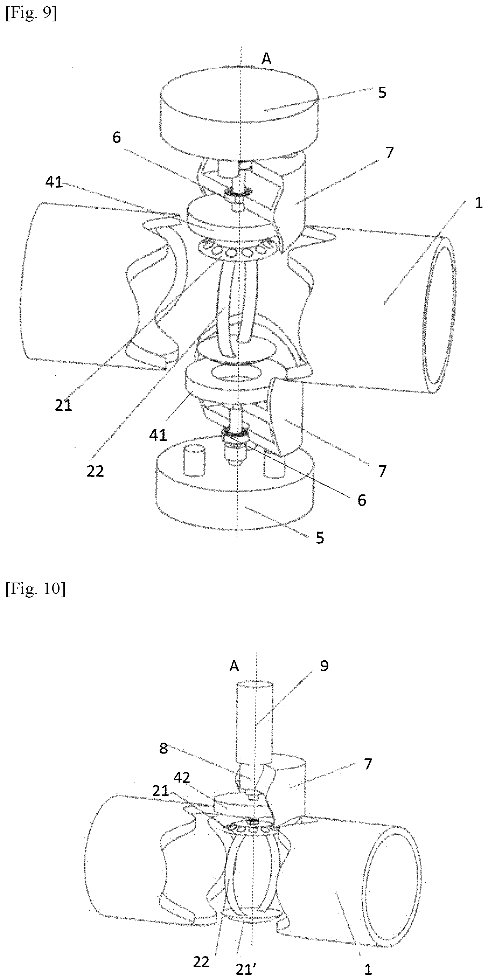

Aux figures 8 et 9 est représenté un dispositif selon l'invention dans lequel la turbine 2 du même type que celles des figures précédentes dans lequel on met en place à l'extérieur du conduit, un élément porte-aimant 4 pour transmettre le couple mécanique de la turbine. On peut ainsi solidariser cet élément porte aimant 4 à une génératrice électrique standard 5 (de type synchrone à aimant permanent à flux radial par exemple) produite en grande série.

Ainsi, sous l'effet de l'écoulement du fluide F, les pales 22 sont entraînée en rotation entraînant en rotation le moyeu 21 portant des aimants 23. L'élément porte-aimant 41 placé en regard est également entraîné en rotation. Cet élément porte-aimant 41 est relié par un arbre 6 à une génératrice 5. L'ensemble élément porte-aimant 41, arbre 6 est enfermé dans un carter 7.

A la figure 9 est représentée une variante comportant une deuxième génératrice, pour les applications nécessitant de forts couples.

Un tel mode de réalisation offre ainsi à la fois un prix de revient très faible mais aussi de très bons rendements. On peut aussi noter que ce mode de réalisation peut aussi être associé à une conduite de section carrée ou rectangulaire de façon à limiter l'entrefer entre les deux supports magnétiques intérieur (moyeu) et extérieur (élément porte-aimant) et ainsi permettre une bonne transmission.

Aux figures 10 et 11 sont représentés un mode de réalisation du dispositif de l'invention dans lequel on utilise de manière combinée en tant que circuit statorique un élément coupleur aimanté 42 extérieur avec un multiplicateur magnétique 8 afin d'augmenter la vitesse de rotation de l'arbre de sortie de façon à pouvoir utiliser une génératrice synchrone à aimants permanents 9 à haute vitesse de rotation.

On obtient ainsi d'excellents rendements de conversion (mécanique > électrique) tout en utilisant des génératrices performantes et très bon marché. De plus, le multiplicateur magnétique n'induit quasiment aucune perte et peut devenir très économique à produire pour peu qu'on en construise un nombre suffisant. On peut aussi noter que ce mode de réalisation peut aussi être associé à une conduite de section carrée ou rectangulaire de façon à limiter l'entrefer entre les deux barillets magnétiques intérieurs et extérieurs et ainsi permettre une bonne transmission du couple vers l'extérieur.

Dans les exemples représentés ci-dessus, l'axe de rotation A de la turbine 2 est uniquement constitué par les paliers 24 autour desquels sont entraînés en rotation les moyeux 21 portant les pales 22.

Aux figures 12 à 14 est représenté un exemple de réalisation du dispositif selon l'invention dans lequel un arbre 25 s'étend centralement entre les deux moyeux 21 constituant ainsi l'axe de rotation A s'étendant transversalement dans le segment de conduit 1.

Comme on peut le voir aux figures 12 et 14, le segment de conduit 1 est conformé pour présenter dans ces parois opposées, deux orifices 11 dans lesquels sont logées les extrémités de la turbine 2, maintenues en place par deux capots 12.

Les moyeux 21 sont ici constitués de deux disques plans présentant au moins pour l'un des aimants 23 à sa périphérie. Chaque moyeu 21 présente en son centre un palier 24 ainsi qu'un arbre 25 s'étendant entre les deux moyeux 21 et constituant l'axe de rotation A de la turbine. Un capot 12 est rapporté sur chaque moyeu 21 et comporte un logement 13 dans lequel se positionnent un palier 24 et une extrémité de l'arbre de rotation 25 de la turbine 2. Le palier 24 est monté fixe dans le logement 13 du segment de conduit 1 et l'arbre 25 est rotatif et solidaire des moyeux 21. On obtient ainsi un dispositif simple à mettre en œuvre et dont la structure simple également lui confère une grande robustesse. Les pales 22 s'étendent diamétralement opposées de part et d'autre de l'axe de rotation A entre les moyeux 21, avec leurs extrémités raccordées aux moyeux 21.

## Revendications

1. Dispositif de génération de courant électrique dans un circuit d'écoulement de fluide, comprenant :
un segment de conduit (1), destiné à être interposé dans le circuit d'écoulement de fluide,
un rotor (2) monté dans le segment de conduit (1) et apte à être mis en mouvement par le passage d'un fluide dans ledit dispositif et
un stator ou circuit statorique (3) agencé pour coopérer avec le rotor (2) et produire le courant électrique,
le rotor (2) étant constitué d'une turbine à flux transversal (2) dont l'axe de rotation (A) s'étend en travers du segment de conduit (1), la turbine (2) comportant aux extrémités longitudinales de son axe de rotation (A), des moyens de maintien (24) contre des parois opposées du segment de conduit (1), le stator ou circuit statorique (3) étant positionné à l'extérieur du segment de conduit (1) au niveau d'une extrémité de la turbine (2) qui est entraînable en rotation lors du mouvement de la turbine (2), et comprend des moyens de génération d'un flux magnétique (23) pour coopérer avec ledit stator ou circuit statorique (3) pour produire le courant électrique,
**caractérisé en ce que** la turbine (2) présente aux extrémités longitudinales de son axe de rotation des paliers (24) sur roulements à billes, la turbine (2) étant constituée de deux moyeux (21, 21') entre lesquels s'étendent des pales (22), de préférence deux, entraînables en rotation sous l'effet de l'écoulement d'un fluide dans le conduit, chaque moyeu (21, 21') présentant un palier (24) et au moins un des moyeux (21) portant les moyens de génération d'un flux magnétique (23).

2. Dispositif selon la revendication 1, **caractérisé en ce que** lesdits paliers (24) sont montés dans des logements (14) ménagés sur le segment de conduit (1) pour maintenir la turbine (2) transversale dans le segment de conduit (1) et autoriser la rotation de la turbine (2).

3. Dispositif selon la revendication 2, **caractérisé en ce que** les roulements à billes sont en céramique.

4. Dispositif selon l'une des revendications 1 à 3, **caractérisé en ce que** les moyens de génération d'un flux magnétique sont des aimants permanents (23).

5. Dispositif selon l'une des revendications 1 à 4, **caractérisé en ce que** chaque pale (22) s'étend entre les moyeux (21), la partie centrale d'une pale (22) balayant un cylindre de révolution autour de l'axe de rotation (A).

6. Dispositif selon la revendication 5, **caractérisé en ce que** les pales (22) de la turbine sont produites par pultrusion de matériaux composites puis cintrées.

7. Dispositif selon la revendication 5, **caractérisé en ce que** les pales (22) de la turbine sont produites en acier inoxydable de qualité alimentaire extrudé en filière puis cintrées.

8. Dispositif selon l'une des revendications 1 à 7, **caractérisé en ce qu'**un moyeu (21, 21') est constitué d'un disque plan.

9. Dispositif selon l'une des revendications 1 à 7, **caractérisé en ce qu'**un moyeu (21,') est constitué d'un disque bombé en forme de dôme.

10. Dispositif selon l'une des revendications 1 à 9, **caractérisé en ce que** l'axe de rotation (A) de la turbine est constitué d'un arbre (25) s'étendant entre les moyeux (21, 21').

11. Dispositif selon l'une des revendications 1 à 9, **caractérisé en ce que** l'axe de rotation (A) de la turbine est constitué uniquement des deux paliers (24).

12. Dispositif selon l'une des revendications 1 à 7, **caractérisé en ce que** le stator ou circuit statorique constitue également le générateur électrique.

13. Dispositif selon l'une des revendications 1 à 7, **caractérisé en ce que** le stator ou circuit statorique comprend un ou plusieurs éléments coupleurs magnétiques, entraînables en rotation et permettant l'entrainement mécanique direct d'une ou plusieurs génératrices électriques.

14. Dispositif selon l'une des revendications 1 à 7 **caractérisé en ce que** le stator ou circuit statorique comprend un ou plusieurs ensembles coupleurs-multiplicateurs magnétiques permettant l'entrainement mécanique d'une ou plusieurs génératrices électriques.

15. Dispositif selon l'une des revendications 1 à 11, **caractérisé en ce que** les extrémités du segment de conduit (1) sont pourvues de moyens de fixation dans le circuit d'écoulement.

16. Circuit d'écoulement de fluide comportant au moins un appareil électrique tel qu'un capteur, **caractérisé en ce que** ledit circuit comporte un dispositif de génération d'énergie électrique selon l'une des revendications 1 à 11, intégré dans le circuit, et destiné à alimenter l'appareil électrique en énergie électrique.

17. Turbine à flux transversal, comportant deux pales (22) s'étendant entre deux moyeux (21, 21') alignés sur l'axe de rotation A, la partie centrale desdites pales (22) étant entraînables en rotation en balayant une surface inscrite dans un cylindre de révolution autour de l'axe de rotation A, destinée à être utilisée dans un dispositif selon l'une des revendications 1 à 15, **caractérisé en ce que** chaque moyeu (21) se présente sous la forme d'un disque plan ou bombé entrainé en rotation par les pales (22), au moins l'un de ses moyeux (21) comportant des moyens de génération d'un flux magnétique, des moyens de maintien alignés sur l'axe de rotation A étant portés par chaque moyeu (21, 21').

## Patentansprüche

1. Vorrichtung zur Erzeugung von elektrischem Strom in einem Fluidströmungskreislauf, umfassend:
ein Leitungssegment (1), das dazu bestimmt ist, in den Fluidströmungskreislauf eingefügt zu werden,
einen Rotor (2), der im Leitungssegment (1) montiert ist und durch das Passieren eines Fluids in der Vorrichtung in Bewegung gesetzt werden kann, und
einen Stator oder Statorstromkreis (3), der so angeordnet ist, dass er mit dem Rotor (2) zusammenarbeitet und den elektrischen Strom erzeugt,
wobei der Rotor (2) aus einer Querstromturbine (2) besteht, deren Drehachse (A) sich quer zum Leitungssegment (1) erstreckt, wobei die Turbine (2) an den Längsenden ihrer Drehachse (A) Haltemittel (24) gegen gegenüberliegende Wände des Leitungssegments (1) aufweist, wobei der Stator oder Statorstromkreis (3) außerhalb des Leitungssegments (1) an einem Ende der Turbine (2) positioniert ist, das bei der Bewegung der Turbine (2) drehbar angetrieben werden kann, und Mittel zur Erzeugung eines magnetischen Flusses (23) umfasst, um mit dem Stator oder Statorstromkreis (3) zusammenzuarbeiten, um den elektrischen Strom zu erzeugen, **dadurch gekennzeichnet, dass** die Turbine (2) an den Längsenden ihrer Drehachse Lager (24) auf Kugellagern aufweist, wobei die Turbine (2) aus zwei Naben (21, 21') besteht, zwischen denen sich Schaufeln (22) erstrecken, vorzugsweise zwei, die durch die Strömung eines Fluids in der Leitung drehbar angetrieben werden können, wobei jede Nabe (21, 21') ein Lager (24) aufweist und mindestens eine der Naben (21) die Mittel zur Erzeugung eines magnetischen Flusses (23) trägt.

2. Vorrichtung nach Anspruch 1, **dadurch gekennzeichnet, dass** die Lager (24) in Aufnahmen (14) montiert sind, die am Leitungssegment (1) vorgesehen sind, um die Turbine (2) quer im Leitungssegment (1) zu halten und die Drehung der Turbine (2) zu ermöglichen.

3. Vorrichtung nach Anspruch 2, **dadurch gekennzeichnet, dass** die Kugellager aus Keramik bestehen.

4. Vorrichtung nach einem der Ansprüche 1 bis 3, **dadurch gekennzeichnet, dass** die Mittel zur Erzeugung eines magnetischen Flusses Permanentmagnete (23) sind.

5. Vorrichtung nach einem der Ansprüche 1 bis 4, **dadurch gekennzeichnet, dass** sich jede Schaufel (22) zwischen den Naben (21) erstreckt, wobei der mittlere Teil einer Schaufel (22) einen Rotationszylinder um die Drehachse (A) überstreicht.

6. Vorrichtung nach Anspruch 5, **dadurch gekennzeichnet, dass** die Schaufeln (22) der Turbine durch Pultrusion von Verbundmaterialien hergestellt und anschließend gebogen werden.

7. Vorrichtung nach Anspruch 5, **dadurch gekennzeichnet, dass** die Schaufeln (22) der Turbine aus lebensmitteltauglichem Edelstahl hergestellt sind, die mittels einer Düse extrudiert und anschließend gebogen werden.

8. Vorrichtung nach einem der Ansprüche 1 bis 7, **dadurch gekennzeichnet, dass** eine Nabe (21, 21') aus einer flachen Scheibe besteht.

9. Vorrichtung nach einem der Ansprüche 1 bis 7, **dadurch gekennzeichnet, dass** eine Nabe (21,') aus einer gewölbten, kuppelförmigen Scheibe besteht.

10. Vorrichtung nach einem der Ansprüche 1 bis 9, **dadurch gekennzeichnet, dass** die Drehachse (A) der Turbine aus einer Welle (25) besteht, die sich zwischen den Naben (21, 21') erstreckt.

11. Vorrichtung nach einem der Ansprüche 1 bis 9, **dadurch gekennzeichnet, dass** die Drehachse (A) der Turbine nur aus den beiden Lagern (24) besteht.

12. Vorrichtung nach einem der Ansprüche 1 bis 7, **dadurch gekennzeichnet, dass** der Stator oder Statorstromkreis auch den elektrischen Generator bildet.

13. Vorrichtung nach einem der Ansprüche 1 bis 7, **dadurch gekennzeichnet, dass** der Stator oder Statorstromkreis ein oder mehrere magnetische Kopplerelemente umfasst, die drehbar angetrieben werden können und den direkten mechanischen Antrieb eines oder mehrerer elektrischer Generatoren ermöglichen.

14. Vorrichtung nach einem der Ansprüche 1 bis 7, **dadurch gekennzeichnet, dass** der Stator oder Statorstromkreis eine oder mehrere magnetische Koppler-Getriebe-Einheiten umfasst, die den mechanischen Antrieb einer oder mehrerer elektrischer Generatoren ermöglichen.

15. Vorrichtung nach einem der Ansprüche 1 bis 11, **dadurch gekennzeichnet, dass** die Enden des Leitungssegments (1) mit Befestigungsmitteln im Strömungskreislauf versehen sind.

16. Fluidströmungskreislauf, der mindestens ein elektrisches Gerät wie einen Sensor umfasst, **dadurch gekennzeichnet, dass** der Kreislauf eine Vorrichtung zur Erzeugung elektrischer Energie nach einem der Ansprüche 1 bis 11 umfasst, die in den Kreislauf integriert und dazu bestimmt ist, das elektrische Gerät mit elektrischer Energie zu versorgen.

17. Querstromturbine, umfassend zwei Schaufeln (22), die sich zwischen zwei Naben (21, 21') erstrecken, die an der Drehachse A ausgerichtet sind, wobei der mittlere Teil der Schaufeln (22) drehbar angetrieben werden kann und eine Oberfläche überstreicht, die in einem Rotationszylinder um die Drehachse A vorgesehen ist, die zur Verwendung in einer Vorrichtung nach einem der Ansprüche 1 bis 15 bestimmt ist, **dadurch gekennzeichnet, dass** jede Nabe (21) in Form einer flachen oder gewölbten Scheibe vorliegt, die von den Schaufeln (22) drehbar angetrieben wird, wobei mindestens eine ihrer Naben (21) Mittel zur Erzeugung eines magnetischen Flusses umfasst, wobei Haltemittel, die auf die Drehachse A ausgerichtet sind, von jeder Nabe (21, 21') getragen werden.

## Claims

1. Device for generating electrical current in a fluid flow circuit, comprising:
a duct segment (1), intended to be interposed in the fluid flow circuit,
a rotor (2) mounted in the duct segment (1) and capable of being moved by the passage of a fluid in said device, and a stator or stator circuit (3) arranged to cooperate with the rotor (2) and produce the electrical current,
the rotor (2) consisting of a transverse-flow turbine (2) whose axis of rotation (A) extends across the duct segment (1), the turbine (2) including, at the longitudinal ends of its axis of rotation (A), means (24) the holding against opposite walls of the duct segment (1), the stator or stator circuit (3) being positioned outside the duct segment (1) at an end of the turbine (2) which can be driven in rotation during the movement of the turbine (2), and comprises means for generating a magnetic flux (23) to cooperate with said stator or stator circuit (3) to produce the electrical current,
**characterised in that** the turbine (2) has bearings (24) on ball bearings at the longitudinal ends of its axis of rotation, the turbine (2) consisting of two hubs (21, 21') between which blades (22) extend, preferably two, rotatably driveable under the effect of the flow of a fluid in the duct, each hub (21, 21') having a bearing (24) and at least one of the hubs (21) carrying the means for generating a magnetic flux (23).

2. Device according to claim 1, **characterised in that** said bearings (24) are mounted in housings (14) provided on the duct segment (1) to keep the turbine (2) transverse in the duct segment (1) and allow the rotation of the turbine (2).

3. Device according to claim 2, **characterised in that** the ball bearings are made of ceramic.

4. Device according to one of claims 1 to 3, **characterised in that** the means for generating a magnetic flux are permanent magnets (23).

5. Device according to one of claims 1 to 4, **characterised in that** each blade (22) extends between the hubs (21), the central part of a blade (22) sweeping a cylinder of revolution about the axis of rotation (A).

6. Device according to claim 5, **characterised in that** the blades (22) of the turbine are produced by pultrusion of composite materials and then curved.

7. Device according to claim 5, **characterised in that** the blades (22) of the turbine are produced from food-grade stainless steel extruded in a die and then curved.

8. Device according to one of claims 1 to 7, **characterised in that** a hub (21, 21') consists of a flat disc.

9. Device according to one of claims 1 to 7, **characterised in that** a hub (21,') consists of a disc curved in the form of a dome.

10. Device according to one of claims 1 to 9, **characterised in that** the axis of rotation (A) of the turbine consists of a shaft (25) extending between the hubs (21, 21').

11. Device according to one of claims 1 to 9, **characterised in that** the axis of rotation (A) of the turbine consists only of the two bearings (24).

12. Device according to one of claims 1 to 7, **characterised in that** the stator or stator circuit also constitutes the electrical generator.

13. Device according to one of claims 1 to 7, **characterised in that** the stator or stator circuit comprises one or more magnetic coupler elements, rotatably driveable and enabling direct mechanical driving of one or more electrical generators.

14. Device according to one of claims 1 to 7, **characterised in that** the stator or stator circuit comprises one or more magnetic coupler-multiplier assemblies enabling the mechanical driving of one or more electrical generators.

15. Device according to one of claims 1 to 11, **characterised in that** the ends of the duct segment (1) are provided with means for fastening in the flow circuit.

16. Fluid-flow circuit including at least one electrical apparatus such as a sensor, **characterised in that** said circuit includes an electrical energy generation device according to one of claims 1 to 11, integrated in the circuit, and intended to supply the electrical apparatus with electrical energy.

17. Transverse-flow turbine, including two blades (22) extending between two hubs (21, 21') aligned on the axis of rotation A, the central portion of said blades (22) being rotatably drivable while sweeping a surface inscribed in a cylinder of revolution about the axis of rotation A, intended for use in a device according to one of claims 1 to 15, **characterised in that** each hub (21) is in the form of a flat or curved disc driven in rotation by the blades (22), at least one of its hubs (21) including means for generating a magnetic flux, holding means aligned with the axis of rotation A being carried by each hub (21, 21').
